(19) Europäisches Patentamt
European Patent Office
Office européen des brevets

(11) **EP 2 491 794 A1**

(12) **EUROPEAN PATENT APPLICATION**

(43) Date of publication:
**29.08.2012 Bulletin 2012/35**

(21) Application number: **12166855.2**

(22) Date of filing: **02.08.2006**

(51) Int Cl.:
*A23J 1/12* (2006.01)   *A23J 1/00* (2006.01)
*A23J 1/16* (2006.01)   *A23K 1/16* (2006.01)
*A23K 1/18* (2006.01)   *A21D 13/08* (2006.01)
*A23L 1/16* (2006.01)   *A23L 1/164* (2006.01)
*A23L 1/176* (2006.01)   *A23L 1/212* (2006.01)
*A23L 1/305* (2006.01)   *A23L 1/31* (2006.01)
*A23L 1/315* (2006.01)   *A23L 1/317* (2006.01)
*A23L 1/325* (2006.01)   *A23L 2/66* (2006.01)
*A21D 13/06* (2006.01)   *A23J 3/14* (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **03.08.2005 US 704953 P**

(62) Document number(s) of the earlier application(s) in accordance with Art. 76 EPC:
**06789201.8 / 1 921 927**

(71) Applicant: **Cargill, Incorporated**
**Minneapolis, MN 55440-5624 (US)**

(72) Inventors:
• **FOX, Eugene, J.**
  **Dayton, OH Ohio 45415 (US)**

• **SHANDERA, Donald, L., Jr.**
  **Ashland, NE Nebraska 68003 (US)**
• **BELL, Eric**
  **Blair, NE Nebraska 58008 (US)**

(74) Representative: **Ehnis, Tobias et al**
**Patentanwälte**
**Dr. Gassner & Partner**
**Marie-Curie-Strasse 1**
**91052 Erlangen (DE)**

Remarks:
This application was filed on 04-05-2012 as a divisional application to the application mentioned under INID code 62.

(54) **Corn protein concentrates**

(57)   The invention provides for corn protein concentrates (CPC). The CPC described herein can be used in food products for consumption by humans.

**Description**

**TECHNICAL FIELD:**

This invention relates to protein concentrates, and more particularly to corn protein concentrates.

**BACKGROUND:**

Corn wet milling is used to separate corn kernels into products such as starch, protein, fiber and oil. Corn wet milling is a two stage process: a steeping process to soften the corn kernel and to facilitate the next step; and a wet milling process resulting in purified starch and different co-products such as oil, fiber, and protein.

**SUMMARY:**

The invention provides for corn protein concentrates (CPC). The CPC described herein can be used in food products for consumption by humans.

In one aspect, the invention provides a food product. Such a food product generally includes a base food and a corn protein concentrate incorporated on or in the base food. According to the invention, the corn protein concentrate is prepared by a process that includes the steps of contacting one or more protein-containing materials with one or more wet-mill streams and one or more carbohydrases, which produces at least one protein concentrate and at least one aqueous stream containing water-soluble carbohydrates, separating the protein concentrate from the aqueous stream containing water-soluble carbohydrates.

In some embodiments, the base food can be pasta (e. g., spaghetti), a baked product (e. g., bread, cake, cookies, or biscuits), or a snack food (e. g., chips, crackers, or trail mix). In other embodiments, the base food is meat (e. g., chicken, pork, beef, or fish) and the corn protein concentrate is incorporated thereon in a batter or breading. In still other embodiments, the base food is a fruit or vegetable and the corn protein concentrate is incorporated thereon in a batter or breading.

In some embodiments, the food product provides nutritional benefit. For example, the food product can be an energy bar or an energy drink. Such a food product that provides nutritional benefits also can include, for example, one or more proteins from whey seed or legume seed. In another embodiment, the base food and/or the food product can be extruded.

Representative wet-mill streams include steep liquor, light steep water, heavy steep liquor, or mixtures thereof, while representative protein-containing materials include light gluten fraction, heavy gluten fraction, corn gluten concentrate, corn gluten meal, gluten cake, and mixtures thereof. Representative carbohydrases include alpha amylase, dextrinase, pullulanase, glucoamylase, hemicellulase, cellulase, and mixtures thereof.

Such a process further can include, for example, defatting the protein-containing materials, contacting the one or more protein-containing materials with one or more phytases, and/or contacting the corn protein concentrate with a deodorizing compound (e. g., a cyclodextrin).

In another aspect, the invention provides a corn protein concentrate that includes at least about 80% protein on a dry weight basis and that substantially lacks one or more exogenous polypeptides having saccharification enzyme activity. Such a corn protein concentrate typically exhibits no significant difference in protein digestibility by an animal than does a corn gluten meal. In still another aspect, the invention provides for a corn protein concentrate that has: at least about 80% protein on a dry weight basis, less than about 5% of granular starch, and about 1% to about 10% liquefied starch carbohydrates and sugars.

In yet another aspect, the invention provides for corn protein concentrate, wherein, when the corn protein concentrate is compared to corn gluten meal, the corn protein concentrate:

a) releases less protein into a 0.5 N NaOH solution; b) releases less protein into an SDS solution; c) has a pH that consistently stays above about 5; d) has a lower wet milling-like odor; e) has less bacterial counts; and/or; f) has lower ash content on a per protein basis.

Such a corn protein concentrate generally exhibits little to no difference in protein digestibility when compared to a corn gluten meal.

In an aspect, the invention provides a corn protein concentrate, wherein, when the corn protein concentrate is compared to corn gluten meal following extrusion, the corn protein concentrate: a) exhibits more controllable expansion; b) exhibits greater expansion; c) exhibits more uniform cell structure; d) creates a more homogenous product; and/or e) produces a pellet with a smoother surface. Such a corn protein concentrate has greater oil binding capacity during extrusion than does the corn gluten meal.

In one aspect, the invention provides a food product that includes an extruded corn protein concentrate as disclosed herein, wherein the food product further comprises a minimum of 10% oil and a maximum of 30% oil. Representative oils include, for example, vegetable oils (e. g., corn oil, soybean oil, canola oil, palm oil, rapeseed oil, peanut oil, or sunflower oil) and animal oils (e. g., chicken fat, tallow, white grease, lard, and fish oil).

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In addition, the materials, methods, and examples are illustrative only and not intended to be limiting. All publications, patent applications, patents, and other references mentioned herein are incorporated by reference in their entirety. In case of conflict, the present specification, including definitions, will control.

The details of one or more embodiments of the invention are set forth in the accompanying drawings and the description below. Other features, objects, and advantages of the invention will be apparent from the drawings and detailed description, and from the claims.

**DETAILED DESCRIPTION:**

The present invention provides for a corn protein concentrate that can be used in food consumed by humans.

*Corn Protein Concentrate (CPC)*

A CPC described herein generally has at least 80% protein (on a dry weight basis) (e. g., 85%, 90%, 95%, 99%, or 100% on a dry weight basis). The CPC described herein is composed primarily of prolamines and glutelins based on the Osbourn Classification System of classifying proteins, which is based on the solubility or polypeptides in a solvent. A typical proximate analysis of a CPC described herein compared to corn gluten meal (CGM) is shown below.

| Component | CPC (as is) | CGM (as is) |
| --- | --- | --- |
| Protein | 75% | 60% |
| Fat | 2.5% | 2% |
| Fiber | 3% | 2.5 % |
| Starch | <1% | 15% |
| Moisture | 10% | 10% |
| Xanthophyll (Mg/lb) | 121 | 107 |
| Density (lb/cu ft) | 38-41 | 36-43 |

A typical amino acid analysis of CGM is shown below. The amino acid composition of a CPC described herein is not expected to differ significantly from that of CGM.

| Amino Acid | % of Total | % of Protein |
| --- | --- | --- |
| Alanine | 5.94 | 7.92 |
| Arginine | 2.42 | 3.23 |
| Aspartic Acid | 4.40 | 5.87 |
| Cystine | 1.13 | 1.50 |
| Glutamic Acid | 15.5 | 20.7 |
| Glycine | 1.69 | 2.25 |
| Histidine | 1.76 | 2.35 |
| Isoleucine | 3.15 | 4.20 |
| Leucine | 12.9 | 17.3 |
| Lysine | 1.08 | 1.45 |
| Methionine | 1.59 | 2.12 |
| Phenylalanine | 4.65 | 6.20 |
| Proline | 6.95 | 9.27 |
| Serine | 4.07 | 5.42 |

(continued)

| Amino Acid | % of Total | % of Protein |
|---|---|---|
| Threonine | 2.21 | 2.95 |
| Tryptophan | 0.30 | 0.40 |
| Tyrosine | 4.22 | 5.62 |
| Valine | 3.44 | 4.59 |

As used herein, CGM refers to the dried residue from corn after the removal of the larger part of the starch and germ and the separation of the bran by the process employed in the wet milling manufacture of corn starch or syrup, or by enzymatic treatment of the endosperm. CGM may contain fermented corn extractives and/or corn germ meal. The protein in CGM has low solubility in water.

Dry solids can be determined by drying of the material at 103°C using a method adapted from Dutch standard method NEN 3332 and according to the American Association of Cereal Chemists (AACC) Official Method 44-15A or by using Official Methods of the AOAC International (AOAC) 935.29.

Protein content of CPC can be determined using, for example, a Bradford Protein Assay (Bradford, 1975, Anal. Biochem., 7:248). Total and soluble protein content can be determined according to AACC Method 46-30 or AOADC 990.03.

Starch content can be determined using a method derived from suitable official analytical methods such as Corn Refiners Association's (CRA) G-28. Total starch and liquefaction-produced carbohydrates can be determined by the AOAC Official Methods of Analysis 996.11. Liquefaction products of starch hydrolysis are not intact starch and should be considered as liquefaction products composed of soluble starch, higher sugars, and sugars. These can be separated from the analysis by methods such as washing with water and/or washing with ethanol. The difference between starch compositional results of CRA G-28 and AOAC 996.11 (e. g., the difference between measured total starch carbohydrates and starch content) results in the amount of soluble starch, higher sugars, and sugars, which should be considered starch liquefaction products instead of the sugars native to the mill streams.

The sugar content of the mill streams and the collected filtrate can be determined using a procedure derived from AACC Method 80-05 (e. g., using a HPLC system (e. g., Aminex HPX-87H ion exclusion column (Bio-Rad, Hercules, CA)) eluded with 0.01 N sulfuric acid mobile phase and having a refractive index detector). The sugar content generally is the sum of the amount of glucose, fructose, maltose and maltotriose sugars standardized against the column.

Sugar DP profile and quantitation in mill streams, liquefact, and extracted solubles of CPC can be performed using a procedure derived from AACC Method 80-05. The water extractables can be analyzed by, for example, precipitating proteins with sulfosalacylic acid, ion exchanging with anion and cation resin, filtering each liquid fraction through a filter (e. g., 0.45 micron Whatman syringe filter), and injecting the liquid into an HPLC system having a silver ion exchange column with water as the mobile phase and having a refractive index detector.

Analysis of the obtained information can be made as the sum of the eluded peaks less than the degree of glucose polymerization (DP) of 14 standardized against the column. The percentage of DP 1-4 sugars (calculated as the sum of the area under the curve of DP 1-4 sugars divided by the sum of the area under the curve of DP 1-14 sugars) is compared to the percentage of DP 5-13 sugars (calculated as the sum of the area under the curve of DP 5-13 sugars divided by the sum of the area under the curve of DP 1-14 sugars). Generally, CGM has predominantly DP 1-2 sugars with only trace amounts, if any, of DP 5-13. On the other hand, the CPC disclosed herein can contain about the same amount or a higher amount of DP 5-13 sugars than DP 1-4 sugars.

Total or crude lipid content can be determined using a protocol derived from AACC Methods 30-24, 30-20, 30-25, CRA G-11, or by AOAC 920.39 or 954.02. Methods using ether extraction, hexane extraction incorporating ball milling in a Spex mill, or acid-hydrolysis often result in different lipid values, with ether extraction generally resulting in the lowest lipid values and acid-hydrolysis generally resulting in the highest lipid values.

The water- or alcohol-absorption can be determined using absorption indexes and the water- or alcohol-solubility can be assessed using Osbourn's classification of protein extraction and solubilization scheme.

Organic acid content can be determined by HPLC using UV or RI detection.

Ash can be determined using a procedure derived from AACC Method 08-01 by wet-ashing of a sample at 560°C or by AOAC 942.05.

Crude fiber can be determined by AOAC 962.09.

Phytate can be determined in a sample by extraction of phytic acid, which can be purified using different techniques and analyzed quantitatively by HPLC using conductivity.

Water activity ($a_w$) is the relative availability of water in a substance and is defined as the vapor pressure of water divided by that of pure water at the same temperature. For example, pure distilled water has a water activity of 1.0. As the temperature increases, $a_w$ typically decreases, with the exception of some salt and sugar solutions. Water tends to migrate from high $a_w$ substances to low $a_w$ substances. In addition, higher $a_w$ substances tend to support more microorganism growth. For example, bacteria usually require an $a_w$ of at least 0.91 and fungi at least 0.7.

$$a_w \equiv p/p_0$$

where p is the vapor pressure of water in the substance, and $p_0$ is the vapor pressure of pure water at the same temperature.

*Methods of Making a Corn Protein Concentrate*

The CPC described herein can be made by the process described in PCT Application No. PCT/US2005/003282, which is incorporated herein by reference in its entirety. Briefly, a CPC described herein is prepared by a process that includes contacting one or more corn protein-containing materials with one or more wet-mill streams and one or more carbohydrases.

The term "corn protein-containing material" refers to streams generated from the wet-milling process wherein greater than 2% of the solids are gluten and less than one quarter of the original kernel fiber and germ. The term "corn gluten" as used herein refers to water insoluble proteins derived from endosperm. Corn protein-containing material includes streams such as heavy gluten, gluten cake, starch wash overflow, and primary feed. One or more of these corn-protein-containing materials can be used in the process.

A wet-mill stream is a flowable stream formed by the wet-milling process. Exemplary wet-mill streams include corn steep liquor (CSL), which can be either heavy (evaporated CSL) or light (LSW), primary feed, any centrifuge or hydrocyclone overflow, a washing or dewatering filtrate, or mixtures thereof. Examples of centrifuge overflows include mill stream thickener overflow, primary overflow, clarifier overflow, starch wash overflow, or mixtures thereof. Examples of hydrocyclone overflows include starch wash overflow and millstream thickener. Examples of washing and dewatering streams include gluten filtrate and fiberwash filtrate. These streams are characterized in that they have at least trace amounts of protein and carbohydrates from corn.

The carbohydrases used can be any enzyme that can facilitate the degradation (such as by saccharification and/or liquefaction) of a complex carbohydrate to a water-soluble carbohydrate. For example, enzymes such as alpha-amylases, glucoamylases, dextrinases, pullulanases, hemicellulases, and cellulases or mixtures can be used. Alpha-amylase can be used to liquefy starch up to about a 40 dextrose equivalent (DE) sweetness measure. Mixtures of glucoamylase and pullulanase can be further used in a saccharification step after liquefaction to further degrade the starch polymers up to about 95-97DE, which contain greater than 90% of the total sugars (DP 1-14) with a composition of at least 90% sugars of DP 1-4.

In some embodiments, the methods involve liquefaction without saccharification. In these embodiments, the enzymes used will be those commonly used to hydrolyze starch molecules such as alpha-amylases. In some embodiments, the methods involve contacting the material with hemicelluloses and celluloses in combination with liquefaction and, optionally, saccharification. Malted grain and parts thereof may also be used as a source of enzyme.

In some embodiments, the protein content of the protein concentrate can be altered by using additional enzymes. For example, phytases and/or pectinases can be used to digest the phytate and/or the pectin, respectively, which will allow them to be separated from the protein concentrate. Use of phytases and pectinases may also result in a protein concentrate that is more digestible than a concentrate that has not been treated. In some applications, elongated proteins are more desirable. Enzymes that join protein fragments such as polyphenoloxidases and/or transglutaminases can be used. These enzymes can be introduced simultaneously with the carbohydrases or they can be added in a separate step.

The corn protein-containing material(s), the wet mill-stream(s), and the carbohydrases can be placed in contact with each other using any method known in the art, such as by slurring, mixing, or blending. In some embodiments, methods can include a filtration step to remove unwanted or undesirable components.

The composition containing the carbohydrases, wet-mill stream(s), and corn protein-containing material(s) is incubated at a time and temperature sufficient to at least degrade the starch and/or other complex carbohydrates present in the corn protein-containing material and/or the wet-mill stream to the point where, upon separation of the aqueous stream containing water-soluble carbohydrates from the resulting corn protein concentrate, the aqueous stream has a higher concentration of water-soluble carbohydrates then the wet-mill stream had prior to contacting the carbohydrases.

Exemplary temperatures that can be used to incubate the mixture containing the carbohydrases, wet-mill stream(s), and corn protein-containing material(s) include from about 30 to about 250°F (15-120°C), and exemplary incubation times include from about 1/2 hr to about 40 hrs. The incubation temperature and time depend on the starting materials, enzymes, and the amount of enzymes used.

Separating the corn protein concentrate from the aqueous stream can be accomplished by any method known in the art. For example, filtration, centrifugation, coagulation, and combinations thereof can be used. It is also possible to increase the concentration of water-soluble carbohydrates in the aqueous stream by recycling or reusing the aqueous stream as one of the wet- mill streams used in the process.

The concentration of protein in the resulting protein concentrate can additionally be increased by rinsing the resulting concentrate with water and/or a wet-mill stream. The rinsing washes away residual carbohydrates and increases the protein concentration on a dry basis. Using this technique, the protein concentration can be increased by at least 2%, 5%, 7%, 10%, or 20% on a dry basis.

Yet another way of increasing the concentration of protein in the protein concentrate is to remove fats from the concentrate (i. e., defatting). Defatting can be accomplished using any method known in the art, for instance by using one or more solvents and/or enzymes to degrade the fats. Examples of solvents that can be used include hexane, isohexane, alcohols, and mixtures thereof. Examples of enzymes that can be used include lipases and the like. The fats can subsequently be separated from the protein concentrate using any method known in the art, for example filtration, floatation, and/or centrifugation.

Additionally, a corn protein concentrate can be decolorized by bleaching using either chemical and/or enzymatic methods. Enzymes that can be used to facilitate bleaching include those having lipoxygenase (LOX) activity or peroxidase activity. Chemicals that can be used alone or in combination with enzymes to facilitate bleaching include ozone, persulfate, and peroxides. The filtration of the protein concentrate can be accomplished while the stream containing the protein is at temperatures of, for example, greater than 45°C, 50°C, 55°C, 60°C, 65°C, 80°C, or 100°C. This provides the advantage of being able to control microbial growth and mycotoxin concentration during the filtration process. The ability to use increased temperatures also allows enzyme activity to be modulated.

A CPC as described herein can be treated with an acid (e. g., in the presence of heat and/or pressure) and/or treated with one or more proteases. The one or more proteases can possess general hydrolyzing activity on peptide bonds or the one or more proteases may possess a more specific activity such as, for example, enhancing a processing functionality or generating a flavor. Hydrolyzed proteins optionally can be heated in the presence of a sugar (e. g., a reducing sugar such as glucose, fructose, corn syrup, or other compound) to produce a desirable smell and flavor. For example, a meaty flavor can be generated by heating the amino acid, valine, in the presence of a reducing sugar. Alternatively, proteins can be deaminated by such treatments to alter functionality such as water solubility.

A CPC can be deodorized by using deodorizing compound. A deodorizing compound can be added to CPC in a dry state or in a liquid or slurried state. Deodorizing compounds include, without limitation, cyclodextrins and alcohols. Examples of cyclodextrins include, without limitation, alpha-cyclodextrins, beta-cyclodextrins, and/or gamma-cyclodextrins. Cyclodextrins can be modified by substituting functional groups, such as hydroxypropylated, methlated, ethylated, or acethylated with various levels of substitution to yield different activities that result in distinct odors and solubility. The deodorizing compound can be introduced at any point during the process of making CPC. The deodorizing compound can be added to the finished CPC product or can be applied to the CPC packaging by mixing, blending, spraying, coating, or other methods obvious to those skilled in the arts. Although the amount of a deodorizing compound that is used in a CPC can vary, generally about 0.05% to 5% (wt/wt CPC on a dry basis) (e. g., about 0.25% to 2.5% (wt/wt CPC on a dry basis)) of a deodorizing compound will provide sufficient result.

*Food Product*

The CPC described herein can be used in a food product for human consumption. A food product that includes a CPC described herein generally has a base food product such as pasta, a baked product, or a snack food. A pasta containing a CPC described herein can be spaghetti, macaroni, fusilli, rotini, fettuccine, linguine, vermicelli, rigatoni, lasagna, cannelloni, or manicotti. A baked product that contains a CPC described herein can include breads, cakes, cookies, and biscuits. A snack food that contains a CPC described herein can include, for example, chips, crackers, energy bars, and energy drinks.

A base food also can include meat (e. g., chicken or pork) that is breaded, battered, and/or marinated with a dry or liquid mixture containing a CPC as described herein. In addition to the above-indicated examples, foods such as cereals, soups and broths, baby formula and food, sauces (e. g., spaghetti) and dressings (e. g., salad dressings) also can contain a CPC as described herein. In some embodiments, a CPC described herein can be used in food products as a replacement for wheat gluten to avoid allergic reactions by people allergic to wheat products.

A food product containing a CPC described herein can be evaluated for odor and flavor using a sensory panel. See, for example, characterization, evaluation and comparison methods based on the Triangle-Comparison or Hedonic Scale Evaluation methods of sensory evaluation (Powers, 1982, In Food Flavours, Part A, Introduction, Morton & Macleod, eds., Elseviers Scientific, Amsterdam, pp 121-168).

In certain embodiments, food is produced by passing through a forming or cooking extruder for processing into the food and the product exhibits desirable pellet and/or kibble functionality.

A CPC described herein provides a means for increasing the protein content of a food when included in a food or snack. CPC may also be processed directly into a food or snack.

In accordance with the present invention, there may be employed conventional chemistries, biochemistries and microbiological techniques within the skill of the art. Such techniques are explained fully in the literature. The invention will be further described in the following examples, which do not limit the scope of the invention described in the claims.

**EXAMPLES:**

Example 1 - Evaluation of CPC

Four samples of corn gluten were received for functional property analyses and were labeled A, B, C and D. Samples A and B were CPC and Samples C and D were corn gluten meal (CGM).

Proximate analysis for moisture, fat, protein, and ash is shown in Table 1, and results are reported on a dry weight basis (with the exception of moisture). The pH of the samples was determined by slurrying the protein samples in an equal mass of distilled water, allowing the solution to equilibrate for 10 minutes, then measuring the pH with a pH probe-meter. Proximate analysis was performed using Official Methods of the AOAC International. Moisture was determined by AOAC 935.29; fat by AOAC 954.02; protein by AOAC 990.03; and ash by AOAC 942.05.

Table 1

|  | A | B | C | D |
|---|---|---|---|---|
| Moisture | 5.37 | 6.16 | 5.91 | 4.69 |
| Fat | 8.95 | 5.54 | 8.06 | 6.24 |
| Protein | 78.14 | 81.05 | 68.32 | 67.31 |
| Ash | 0.95 | 1.54 | 1.27 | 1.29 |

Solutions were prepared with enough CPC to produce a concentration equivalent of 5% protein suspended in different solvents to examine solubility. Water, water:denatured ethanol (in a 1:1 ratio), or denatured ethanol (97%) were used as the solvents. Protein analyses were done on the suspensions using the Bio-Rad Protein Assay. One ml aliquots of each suspension were centrifuged in an Eppendorf microcentrifuge for 10 minutes and the supernatants analyzed for dissolved protein using the Bio-Rad Protein Assay. Protein solubility indices were calculated as follows:

$$[\text{protein content of supernatant / protein content of suspension}] \times 100.$$

Table 2 shows that all four samples had relatively low solubility in water compared to, for example, globular proteins such as egg and purified soybean protein isolate.

Results indicated that the solubility of samples A and B were substantially increased in the water: ethanol solvent. The supernatant of sample D, however, tested at 2.9% and 2.1%, indicating a significant increase in solubility.

While there was some dissolved protein detected in ethanol-suspended samples A and B, the supernatants of samples C and D in the ethanol tested at 0.05% and 0.0%, respectively, indicating very low solubility for samples C and D.

The solubility in water was low for all four samples, although the presence of ethanol seemed to improve the solubility. In any event, a water:ethanol solvent appears to be a suitable solvent for samples A and B.

Table 2

|  | A | B | C | D |
|---|---|---|---|---|
| Water | 2.03 | 1.96 | 5.04 | 3.01 |
| 1:1 Water:EtOH | 13.82 | 21.57 | 6.25 | -- |
| EtOH | 16.35 | 9.39 | -- | 0.0 |

The effect of pH on solubility of samples A and B was examined. The pHs of the aqueous suspensions prepared as described above for samples A and B were adjusted to each of the pHs shown below in Table 3 (i. e., 2, 4, 5.5, 7, 9 and 11) and an aliquot was drawn. The aliquot was centrifuged and analyzed for protein concentration, i. e., indicating relative solubility of the proteins at each pH. Results are shown in Table 3. There was a very small increase in solubility at alkaline pH for sample A, and no increases were detected for sample B.

Table 3

| pH | A | B |
|---|---|---|
| 2 | 0.250 | 0.075 |
| 4 | 0.150 | (below detection limits) |
| 5.5 | 0.112 | (below detection limits) |
| 7 | 1.193 | 0.062 |
| 9 | 0.612 | (below detection limits) |
| 11 | 1.325 | 0.168 |

More than one pH optimum for solubility was observed, but because these samples contain more than one type of protein, it is possible that the different proteins are solubilizing at different pH's.

Example 2 - Pasta containing CPC.

250 g batches of pasta dough was made according to the recipes (bold columns) shown in Table 4. The Semolina® flour (Lakewinds Natural Foods and Home, Minnetonka, MN) and a CPC (Blair, NE) were mixed at the percentages indicated in Table 4. The 83.3 g of water was pre-weighed. The water was stirred into the dry ingredients a little bit at a time until all 83.3 g were used.

The 5% CPC formulation was made first. The total amount of water added was 90.0 g. The 10% CPC formulation was made next and a total of 100.1 g of water was added to the dry material. The additional 10 g of water required by the 10% formulation compared to the 5% formulation was consistently observed. The control formulation was made last. It was anticipated that less water would be needed than specified in the formulation, thus the initial amount of water added was 73.3 g. A total of 78.4 g water was added to the control dough. Therefore, the inclusion of CPC to the base formulation at 5% increased the amount of water needed to bind the dough together. With this formulation, every 5% increase in CPC would require an additional 10 g water.

Table 4

| | Control | | | 5% CPC | | | 10% CPC | | |
|---|---|---|---|---|---|---|---|---|---|
| | % | Expected (g) | Used (g) | % | Expected (g) | Used (g) | % | Expected (g) | Used (g) |
| Semolina | 66.7 | 166.7 | 166.7 | 61.7 | 154.2 | 154.2 | 56.7 | 141.7 | 141.7 |
| CPC | 0 | 0 | 0 | 5.0 | 12.5 | 12.5 | 10.0 | 25.0 | 25.0 |
| Water | 33.3 | 83.3 | 78.4 | 33.3 | 83.3 | 90.0 | 33.3 | 83.3 | 100.0 |

The dough was turned out onto a countertop and kneaded. The additional 20 g of water was added as needed for the dough to hold together. The total amount of water used was determined. The dough was kneaded for about 5 additional minutes or until the dough texture was uniform. The dough was rolled into a ball, covered, and left to stand for 10 minutes.

The dough was rolled out with a rolling pin into a 12" x 3" rectangle. The flattened dough was fed through a Marcato Pasta Drive Roller at roller setting "1". The dough was cut in half lengthwise for a more manageable sheet length. The dough was folded over lengthwise, rolled, and the process repeated again.

The rollers were adjusted to setting "2" and the dough was fed through the machine. The roller motors were transferred to a wider cutting mechanism, and the dough fed through again. The strands of pasta were separated.

The more CPC that was present in the dough, the darker the color was. Pasta samples with CPC were not as sticky as the control. The strands of control pasta bound to each other immediately after cutting, making it difficult to separate strands without breaking or stretching. On the other hand, the CPC-containing pasta strands were much easier to separate.

The texture of the rolled dough was analyzed prior to cooking. A strip of rolled dough approximately 1" x 3" were analyzed using a 45° chisel edge probe to cut through the sample. The testing parameters were as follows: Pre-test speed: 0.50 mm/sec; Test speed:

0.50 mm/sec; Post-test speed: 2.0 mm/sec; Distance (of penetration): 2-3 mm, depending on the thickness of the sample; and Trigger force: 10g. Based on these testing parameters, the force required to cut through the each sample of dough was determined. Results of the texture analysis are shown in Table 5.

Table 5

|  | Control | 5% CPC | 10% CPC |
|---|---|---|---|
| Average | 328.13 | 358.99 | 541.04 |
| Standard Deviation | 111.97 | 110.38 | 219.40 |

To cook the pasta, 300 g of water was brought to a rolling boil. 20 g of pasta was added to the boiling water and cooked for 10 min. After cooking, the pasta was immediately drained and plunged into ice water to stop the pasta from cooking any further. The pasta was then drained.

While the pasta was cooking, the sample containing 10% CPC had a distinct corny odor. None was detected with the control or with the sample containing 5% CPC. The cooked control pasta was *al dente*, exhibiting a little resistance to biting. The CPC-containing samples were a little chewier than the control. The 10% CPC sample had distinct corny notes, the 5% CPC sample had faint corny notes, and the control had none.

The sensorial indication of firmer texture was confirmed by texture analysis. A trend was observed toward firmer texture with increased CPC concentration. No statistical difference ($P>0.10$) was found among the pasta samples when a one-way ANOVA was performed on the data.

Example 3 - Biscuits containing Hexane-treated CPC

Cookies (biscuits) were made according to the recipes shown in Table 6.

Table 6

| Ingredients | Control (g) | 10% CPC (g) | 15% CPC (g) | 20% CPC (g) |
|---|---|---|---|---|
| Wheat flour Uno | 330.0 | 297 | 280.5 | 264 |
| Hexane-treated CPC | 0 | 33 | 49.5 | 66 |
| Sodium Bicarbonate | 4.0 | 4.0 | 4.0 | 4.0 |
| Sugar S 1 | 200.0 | 200.0 | 200.0 | 200.0 |
| Salt | 2.0 | 2.0 | 2.0 | 2.0 |
| Liquid whole eggs | 45.0 | 45.0 | 45.0 | 45.0 |
| Cake margarine | 200.0 | 200.0 | 200.0 | 200.0 |
| Total | 781.0 | 781.0 | 781.0 | 781.0 |

The height and diameter of cookies (biscuits) from each batch are described in Table 7.

Table 7

|  |  | Control | 10% CPC | 15% CPC | 20% CPC |
|---|---|---|---|---|---|
| Diameter (mm) | Biscuit 1 | 64 | 60 | 59 | 58 |
|  | Biscuit 2 | 63 | 60 | 59 | 57 |
|  | Biscuit 3 | 63 | 61 | 59 | 58 |
|  | Average: | 63.3 | 60.3 | 59.0 | 57.7 |
| Height (mm) | Biscuit 1 | 9 | 10 | 10.5 | 11.5 |
|  | Biscuit 2 | 9 | 9.5 | 10 | 11.5 |
|  | Biscuit 3 | 8.5 | 10 | 11 | 12 |
|  | Average: | 8.8 | 9.8 | 10.5 | 11.7 |

The use of sodium bicarbonate instead of baking powder had no effect on the differences between the control biscuits and the biscuits made with the hexane-treated CPC. The biscuits had a slightly smaller surface as more hexane-treated CPC was added. The difference in the size of the surface did not appear to be significant and could likely be remedied by adding additional water and/or eggs. In addition, the more hexane-treated CPC that was added to the biscuits, the more the biscuits kept their non-baked shape (e. g., milled edge) and thickness. The biscuits containing hexane-treated CPC also were browner than the control biscuits. There was a certain taste (e. g., spicy or sweet) that was more pronounced with the higher percentages of hexane-treated CPC in the recipe. Following cooking, the biscuits containing the hexane-treated CPC had darker yellow crumbs.

Example 4 - Cake containing Hexane-treated CPC

Cake was made using the recipe shown in Table 8.

Table 8

| Ingredients | Control (g) | 10% CPC (g) |
|---|---|---|
| Wheat flour Uno | 315 | 283.5 |
| Hexane-treated CPC | 0 | 31.5 |
| Starch C*Gel 20006 | 35 | 35 |
| Sodium Bicarbonate | 7 | 7 |
| Emulsifier BV40 | 28 | 28 |
| Sugar S 1 | 315 | 315 |
| Liquid whole eggs | 350 | 350 |
| Cake margarine | 350 | 350 |
| Total | 1400 | 1400 |

The control cake had slightly more volume and open structure than did the cake containing hexane-treated CPC. The cake containing hexane-treated CPC was a little darker than the control on the outside and a bit darker yellow than the control on the inside. There was also a slight difference in the taste. Overall, there did not appear to be any significant differences between the control cake and the cake made with CPC.

Example 5 - Coating for Fried Foods

Pork loin (fresh, sliced cross-wise into 1/2 inch thick pieces) was soaked in Kemps® Cultured Lowfat Buttermilk for 15-20 mins and coated with Gold Medal® All Purpose Flour or a 1:1 mixture (150 g of each) of Gold Medal® All Purpose Flour and CPC. The excess coating was shaken off the pork loin and each coated piece was placed onto a piece of parchment paper and weighed.

Peanut oil (Cub Foods® brand) was heated in two different fryers (Presto® Dual Basket ProFry™; National Presto Industries, Inc. Eau Claire, WI) to 350°F. An initial pair of control pork loins was fried to determine the frying time needed to cook the samples. Following that determination, a control pork loin was placed into the basket of one fryer and the CPC-coated pork loin was placed into the basket of the second fryer. Both baskets were immersed in the hot oil simultaneously and fried for 8.5 mins. This process was repeated for four control pork loins and four CPC-coated pork loins. During frying, the loose flour left on each piece of parchment paper was weighed.

After frying, each pork loin was drained for 1 minute and then weighed. The color of the cooked cutlets was compared visually and photographs were taken. The pork loins were sliced and evaluated by an informal panel. The loss due to frying was calculated and compared for each sample. Those results are shown in Table 9.

Table 9

| Trial No. | Sample | coated sample (g) | loose flour (g) | sample (g) | after frying (g) | lost on frying (g) | lost on frying/g sample (g) |
|---|---|---|---|---|---|---|---|
| 1 | Control | 136.1 | 0.5 | 135.6 | 101.4 | 34.2 | 0.25 |
| | Control | 128.4 | 1.6 | 126.8 | 94.2 | 32.6 | 0.26 |

(continued)

| Trial No. | Sample | coated sample (g) | loose flour (g) | sample (g) | after frying (g) | lost on frying (g) | lost on frying/g sample (g) |
|---|---|---|---|---|---|---|---|
| 2 | Control | 139.3 | 0.4 | 138.9 | 102.4 | 36.5 | 0.26 |
|  | CPC-coated | 133.0 | 0.3 | 132.7 | 95.4 | 37.3 | 0.28 |
| 3 | Control | 133.1 | 1.9 | 131.2 | 92.4 | 38.8 | 0.30 |
|  | CPC-coated | 123.2 | 1.5 | 121.7 | 83.4 | 38.3 | 0.31 |
| 4 | Control | 141.8 | 0.8 | 141.0 | 100.0 | 41.0 | 0.29 |
|  | CPC-coated | 152.5 | 0.3 | 152.2 | 114.2 | 38.0 | 0.25 |
| 5 | Control | 144.0 | 0.2 | 143.8 | 107.4 | 36.4 | 0.25 |
|  | CPC-coated | 151.2 | 0.2 | 151.0 | 109.4 | 41.6 | 0.28 |

The control pork loins lost an average of $36.6 \pm 3.0$ g upon frying, while the CPC-coated pork loins lost an average of $38.8 \pm 1.9$ g upon frying. In addition, the control pork loins lost an average of $0.27 \pm 0.02$ g per gram of sample upon frying, while the CPC-coated pork loins lost an average of $0.28 \pm 0.03$ g per gram of sample upon frying. No statistical difference was found between the control and the CPC-coated pork loins ($\alpha = 0.5$) after t-tests were performed on the data.

Example 6 - Nutritional Supplement

CPC was included in a single serving-style nutrition (energy) bar or snack. The CPC was included as an ingredient in the formulation at a rate of at least 15% inclusion of the food as a source of protein and/or to enhance the texture of the bar. The bar contained greater than 20% protein content. CPC oil binding properties can be used to increase the oil and overall energy content of the bar. See, for example, Example 12 below.

Example 7 - CPC as a Food

CPC was extruded in a twin-screw extruder with a high shear screw configuration and a round hole die. A 12-blade cutter was set to cut the kibble in 3/4 inch long pieces as it exited the die. Water was added at the rate of 9 kg/hr and tapioca starch was added at the rate of 6 kg/hr per 54 kg/hr CPC. The extruded kibbles were dried in a fluidized bed dryer. A lightly expanded protein food was produced that had a bulk density of 360g/L and the consistency of a extruded corn puff. Extrusion conditions were optimized to control expansion and produce a product that did not have a mealy or gritty consistency upon consumption. The food contained 74% protein on a dry basis. The CGC kibbles can be consumed as is or, optionally, after addition of flavoring and or coatings.

Example 8 - CPC as an Ingredient in a Snack Food

CPC was prepared as in Example 7 except that 10% tapioca starch and 5% soybean protein isolate where mixed with CPC prior to extrusion. The dried material was sprayed with vegetable oil and Cajun spices were added to produce a snack material. Optionally, the material can be mixed with other well recognized snack materials such as nuts, pretzels, and or cereal products. Examples of acceptable nuts include peanuts, sunflowers, cashews, and the like. Examples of acceptable cereal products include breakfast cereals, corn flakes, breadsticks, and the like.

Example 9 - Bread containing CPC.

The effect of CPC was evaluated on dough and baked bread. Doughs made with corn flour or CPC with and without hexane extraction was compared to doughs made with high protein or low protein wheat flour. The dough containing the CPC was softer and stickier than the dough made with corn flour or the high or low protein wheat flour.

Loaf volumes of the bread containing CPC and hexane-extracted CPC were lower than the bread made with corn flour or the high or low protein wheat flour, and had slightly yellowish color.

Example 10 - Evaluation of CPC

Proximate analysis was performed on three samples of CPC and three samples of corn gluten meal. Proximate analysis was performed using Official Methods of the AOAC International. Moisture was determined by AOAC 935.29; fat by AOAC 954.02 (acid hydrolysis) and AOAC 920.39 (ether extract); protein by AOAC 990.03; ash by AOAC 942.05, and total starch and sugars were determined by AOAC 996.11. Total starch was determined by official analytical method of the Corn Refiners Association, CRA G-28. Sugars were determined by the difference between total starch and sugars minus total starch. Sugars included starch liquefaction products, higher sugars, and sugars, including those native to the wet milling streams captured in the CPC. Results of this analysis are shown in Table 10 and are reported on a dry weight basis (with the exception of moisture).

Table 10. Compositional Analysis of Corn Protein Concentrate compared to Corn Gluten Meal

|  | CPC 1 | CPC2 | CPC 3 | CGM 1 | CGM2 | CGM 3 |
|---|---|---|---|---|---|---|
| Moisture | 7.3 | 8.2 | 10.6 | 8.6 | 9.6 | 11.0 |
| Protein | 81.5 | 82.2 | 81.5 | 70.3 | 70.6 | 70.7 |
| Fat (ether extract) | 2.42 | 2.56 | 2.44 | 1.25 | 1.11 | 1.39 |
| EE (fat:protein ratio) | 0.030 | 0.031 | 0.030 | 0.012 | 0.016 | 0.020 |
| Fat (acid hydrolysis) | 5.2 | 4.8 | 5.7 | 4.4 | 4.1 | 3.7 |
| AH (fat:protein ratio) | 0.064 | 0.058 | 0.070 | 0.063 | 0.058 | 0.052 |
| Ash | 1.5 | 1.1 | 1.3 | 1.2 | 1.2 | 1.2 |
| Ash:protein ratio | 0.018 | 0.013 | 0.016 | 0.017 | 0.017 | 0.017 |
| Total starch | 0.4 | 0.9 | 0.7 | 16.0 | 16.6 | 18.5 |
| Total starch & sugars | 5.4 | 5.7 | 6.6 | 18.5 | 19.2 | 20.5 |
| Sugars | 5.0 | 5.8 | 5.9 | 2.5 | 2.6 | 2.0 |
| Magnesium | 0.07 | 0.06 | 0.05 | 0.05 | 0.04 | 0.07 |
| pH | 5.6 | 5.5 | 5.5 | 4.4 | 4.6 | 4.3 |

CPC has a higher quantity of ether-extractable fats in comparison to the CGM. However, the total fat content of the samples as determined by acid hydrolysis is similar between CGM and CPC on a protein unit (ratio) basis. Although not bound by any particular mechanism, the process of making the CPC as described herein may release the fat so as to make it more available for extraction with ether. This higher level of "free" fats result in different functional and nutritional properties (e. g., extrusion processing functionality and digestibility) of CGC as compared to CGM. In addition, the greater accessibility of the fats and oils to solvents such as ether and hexane make the CPC material more easily defatted. The quantity of intact starch is decreased from 16.0-18.5% in CGM to 0.4-0.9% in CPC. The quantity of sugars and starch liquefact (higher sugars) is increased from 2.0-2.6% in CGM to about 5.0-5.9% in CPC (of the dry weight composition). The magnesium content of CPC is unexpectedly similar to the CGM and was not concentrated due to the removal of starch (e. g., the magnesium content is not significantly different on a mass basis and is lower on a protein basis than the CGM). As shown in Example 1, the pH of CGC is higher, at about 5.5-5.6, than CGM, at 3.9-4.6, and CGC has a more consistent pH for manufacturing benefits of pH control and cost of adjustment. When compared to CGM, CPC was found to contain fewer wet milling smells and odors; a panelist of judges and those familiar with the wet milling process found that CPC contained fewer smells commonly associated with the wet milling process in comparison to CGM and had a smell more similar to corn.

Example 11- Extraction of Fat from CPC

The concentration of protein in the CPC was increased through removal of the fats (i. e., defatting). One method of defatting is performed by passing hexane through a bed of CPC in an industrial solvent extractor. The hexane is applied in a countercurrent flow pattern to the movement of the newest to most fat extracted CPC. The CPC is desolventized after centrifuging or filtering using a desolventizing-toaster apparatus commonly found in oilseed and germ extraction plants. Examples of other solvents that can be used include hexane, isohexane, alcohols, and mixtures thereof. Alternatively, the solvent can be applied to the CPC and separated in a reflux or membrane separation devices. The solvent can be recovered through distillation to separate the oil from the solvent and the reclaimed solvent can be reused in the extraction process.

Example 12 - Extrusion Properties and Oil Binding

CPC was tested in a pilot scale Buhler twin screw extruder with moderate and high shear screw (flite) setups. The extruder was operated at 450 rpm. Water and feed rates were varied to control the work put into the CPC and the expansion ratio. Extrusion parameters used on CPC alone and with mixtures of other ingredients is shown in Table 11. Texture analysis of the extrudate was performed on a TA Instruments Texture Analyzer (Model TX2i) using a Back Extrusion Cell and a 45 mm diameter probe with a compressive deformation rate of 1 mm/sec and a 50 g trigger force. The probe was allowed to compress the pellets 3 mm, then the compression stroke was repeated and the force in grams of the second compression was recorded.

Table 11. Twin Screw Extrusion Parameters of Extruding CPC Alone and with Other Ingredients

|  | Feed (kg/hr) | Water (kg/hr) | Energy (Watt-Hr/kg) | Die Temperature (°C) | Die Pressure (Bar) |
|---|---|---|---|---|---|
| 100% CPC | 60 | 8.5 | 142 | 151 | 37 |
| 100% CPC | 35 | 8.0 | 134 | 132 | 26 |
| 90% CPC + 10% Tapioca Starch | 60 | 9.0 | 142 | 147 | 34 |
| 70% CPC + 30% Soybean Protein Isolate | 60 | 14.0 | 129 | 147 | 39 |
| 88% CPC + 10% corn oil + 2% soy lecithin | 60 | 5.5 | 92.8 | 132 | 22 |
| 80% CPC + 20% Palm Kernel Oil | 55 | 2.5 | 105 | 129 | 15 |
| 85% CPC + 15% Chicken Fat | 60 | 3.0 | 88.9 | 135 | 13 |
| Inclusion % are on an as is basis. | | | | | |

Table 12. Product Characteristics of Twin Screw Extruded CPC and CPC with Other Added Ingredients

| Extruded Ingredients | Bulk Density (g/L) | Angle of Repose (degree) | Texture Analysis (g Force) |
|---|---|---|---|
| 100% CPC | 202 | 21.3 | 6033 |
| 100% CPC | 564 | 14.51 | 110455 |
| 90% CPC + 10% Tapioca Starch | 360 | 18.45 | 24388 |
| 70% CPC + 30% Soybean Protein Isolate | 436 | 19.67 | 73961 |
| 88% CPC + 10% corn oil + 2% soy lecithin | 662 | 23.17 | 50496 |
| 80% CPC + 20% Palm Kernel Oil | 653 | -- | -- |
| 85% CPC + 15 % Chicken Fat | 267 | -- | -- |

When extruded without other ingredients, CPC had good expansion properties to make expanded or puffed pellets of several sizes, shapes and bulk density. Table 12 lists physical characteristics of various tested extrudates. Control of energy input into the system could be used to produce a pellet that was devoid of any mealy or gritty texture mouthfeel upon consumption; higher levels of shear and work improved texture and mouthfeel of extrudate when 100% CPC was extruded. Addition of tapioca starch increased expansion, but also increased water requirements. Samples with added starch did not expand as uniformly (shape, blistering, etc.) as those made from CPC only. Addition of soy protein isolate increased water requirements during extrusion, but inclusion of soy isolate provides a more balanced amino acid profile in the final product.

A greater than 80% protein pellet was produced by extruding a blend of CPC and soybean protein isolate. Incorporation of chicken fat, palm oil, soybean oil, and corn oil were tested at inclusion levels of 5, 10, 15, and 20%. Soy Lecithin was also included at 2% with the various fats. Saturation level impacted extrudability; saturated fats such as palm oil had the easiest incorporation. CGM also was tested for extrudability in combination with other ingredients, but CGM had comparatively poorer extrusion performance and did not bind oil as well as CPC. In addition, extrusion of CGM resulted in a dark brown or caramel color.

Example 13 - Further Processing by Hydrolysis

The CPC is further processed by heated refluxing in 2 N HCl for 1 hr at 90°C to hydrolyze the protein. The hydrolyzed protein can be used as is as a higher solubility protein source or be further process by dehydration and heat application in the production of flavoring compounds to be further utilized in food applications. The hydrolyzed protein can be further reacted with other compounds such as reducing sugars to produce additional flavors. Optionally, the hydrolysate can be mixed with salts such as mono-sodium glutamate (MSG) to enhance flavor.

Example 14 - Water Absorption and Solubility Indices

Water absorption indices and water solubility indices of CGM and CPC were determined as outlined in American Association of Cereal Chemists (AACC) Official Methods 56-20 and also by Anderson et al. (1969, Cereal Science Today, 14(1):4-11). Additionally, the % solubilized protein was calculated as the percent of the original samples protein content that was measured in the supernatant after centrifuging (as measured by AACC using an Elementar Variomax nitrogen analyzer and a protein conversion factor of 6.25). The CPC product released significantly more solids into the water solution (supernatant) than did the CGM product. WAI and the % protein in the supernatant were not statistically different. Results are shown in Table 13.

Table 13. WAI and WSI in water by Protein Products

| Product | WAI (%) | WSI (%) | % Solubilized Protein |
|---------|---------|---------|-----------------------|
| CGM 1 | 252 | 3 | 4.1 |
| CGM2 | 260 | 3 | 5.0 |
| CPC 1 | 253 | 6 | 5.7 |
| CPC2 | 307 | 5 | 2.6 |

Example 15 - Caustic Solubility Index

CPC and CGM samples from Example 14 were examined for solubility in a solution of 0.5 N sodium hydroxide (NaOH) based on methods and materials disclosed in Example 14. CPC and CGM were placed in 0.5 N NaOH and mixed for 1 hr. The samples were centrifuged at 4000 xg for 10 min and the supernatant collected. The % solubilized protein was measured by AOAC 990.03 and was determined as the percent of the protein content measured in the supernatant after centrifuging relative to the protein content measured in the original samples. CPC unexpectedly had lower protein solubility (protein released into the solution) in a solution of 0.5 N NaOH than did the CGM. Results are shown in Table 14.

Table 14. Solubilized CGM and CPC Proteins in 0.5 N NaOH

| Product | % Solubilized Protein |
|---------|-----------------------|
| CGM 1 | 74.3 |
| CGM2 | 74.3 |

(continued)

| Product | % Solubilized Protein |
|---------|----------------------|
| CPC 1 | 28.8 |
| CPC2 | 27.5 |

Example 16 - Sodium Dodecyl Sulfate Solubility Index

CPC and CGM solubility in a solution of 1% SDS was determined based on methods and materials disclosed in Example 14. CPC and CGM were placed in 1% SDS and mixed for 1 hr. The samples were centrifuged at 4000 xg for 10 min and the supernatant collected. The amount of solubilized protein was calculated as the percent of protein content that was measured in the supernatant after centrifuging (as measured by AOAC 990.03) relative to the protein content in the original samples. Slightly less of the protein from CPC was released into solution compared to the CGM. Results are shown in Table 15.

Table 15. Solubilized Protein in 1% SDS of CGM and CPC

| Product | % Solubilized Protein |
|---------|----------------------|
| CGM 1 | 11.8 |
| CGM 2 | 13.9 |
| CPC 1 | 10.4 |
| CPC2 | 8.4 |

Example 17 - Protease Digestibility

About 3 grams of protein material was suspended in 30 grams of water, to which an amount of enzyme was added and the mixture was incubated in a shaking waterbath at 50°C for 20 hrs. 3 $\mu$l of GC106 protease enzyme (Genencor International; Palo Alto, CA) was added to the CPC or the CGM and the pH was adjusted to 4.3 (Treatment 1), or 50 $\mu$l of each of GC 1 06 and Proteinase T was added to CPC or CGM and the pH was adjusted to 4.3 (Treatment 2). After incubating 20 hrs, each mixture was centrifuged at 4000 xg for 15 minutes and the supernatant was examined for soluble protein content by AOAC 990.03. Results are shown in Table 16. No significant difference in protein digestibility was observed between CGM and CPC. Total protein digested by the proteases appeared dependant on both concentration and the type of protease used.

Table 16. % of Original CGM or CPC Protein (Nitrogen x 6.25) Released into Solution with Protease Treatment

| Product | Enzyme Treatment (20hr, 50°C, pH 4.3) | |
|---------|----------------------|----------------------|
| | Treatment 1: GC 106 | Treatment 2: Proteinase T+GC106 |
| CGM 1 | 11 | 27 |
| CGM2 | 14 | 28 |
| CPC 1 | 11 | 28 |
| CPC2 | 8 | 25 |

Example 18 - Deodorizing

A mixture of cyclodextrins (alpha-, beta-, and propylated-beta-) are applied to the filtered cake material of CPC. The cyclodextins may be applied in dry form and mixed with the cake or sprayed on in wet form. The treated cake is then dried in the presence of the cyclodextrin. The dried CPC has substantially less corn and/or wet milling associated odors than the untreated material.

Example 19 - Deodorizing

An aqueous and alcohol solution of cyclodextrins was applied to finished CPC by a spray application in at two concentrations of about 0.1 % and about 2% on a wt/wt basis. About 25 grams of CPC was placed in 150 ml sealed containers. Solutions of cyclodextrin or a control of water was applied to the CPC. The CPC was mixed and allowed to equilibrate for 5 minutes in a sealed container. The head-space within the container was tested by a sniff test of human judges. A panel of 6 judges unanimously found that the CPC treated with cyclodextrins had a significantly and substantially reduced odor commonly associated with the wet milling process. The treated product was described as having a corn-like note when applied at very low levels of about 0.1% to having a bland, lack of smell when the solution was applied at about 2%. The treated CPC may be dried. Alternatively, similar results are expected when applying cyclodextrins to CPC in dry form.

Example 20 - Microbial Stability

Four samples of CPC or CGM were analyzed for microbiological and water activity. CPC had less bacterial counts as determined by a Standard Plate Count test conforming to AOAC 966.23 as shown in Table 17.

Table 17. Comparison of Standard Plate Counts of CPC compared to CGM

| Sample | Standard Plate Count |
|---|---|
| Corn Gluten Meal | 2000 |
| CPC Lot #1 | 450 |
| CPC Lot #2 | 220 |
| CPC Lot #3 | 460 |
| CPC Lot #4 | 330 |

Example 21 - 70% Ethanol Absorption Index

CPC solubility/absorption functionality in a solution of 70% ethanol:30% water with 0.3% mercaptoethanol was tested based on methods and materials used in Example 9 and those of as outlined in American Association of Cereal Chemists Official Methods 56-20 and also by Anderson et al., 1969, Cereal Science Today, 14(1):4-11. The absorption index is calculated on the final pellet weight and is a compounded by both the retention of absorbed ethanol solution in the pellet as well as loss of weight due to solubilization of protein into solution. The centrifuged pellet from the CPC comparatively weighed more than the centrifuged pellets from CGM thus having a higher adsorption index. Results are shown in Table 18.

Table 18. 70% Ethanol Absorption Index by Protein Products

| Product | EtOH-AI |
|---|---|
| CGM 1 | 2.5 |
| CGM2 | 2.4 |
| CPC 1 | 3.3 |
| CPC2 | 3.6 |

Example 22 - Oil Solubility and Adsorption Index

About 7 grams of protein material was suspended in 20 grams of corn oil and tumbled in 50 ml centrifuge tubes for 1 hour. The tubes were then centrifuged at 4500 g for 15 minutes and the supernatant oil was poured off. An amount of 20 grams of water was added and the pellet was resuspended by vortexing for 15 sec. The mixture was again centrifuged at the above conditions. The oil suspended was removed, dried and weighed and Oil Binding Index=weight of oil recovered/weight of protein material(db)* 100. The supernatant water was further poured off the pellet and the pellet was dried. The increase in dry basis weight between the initial material and the dried pellet was determined and the Oil Adsorption Index=Weight increase of pellet(db)/weight of protein material(db)* 100. Increase of dry basis weight of the protein material was assumed to be oil adsorbed during treatment. CPC adsorbed less oil onto particle surfaces than CGM control. Results are shown in Table 19.

Table 19. % Corn Oil Adsorbed and Bound by Protein Products

| Product | OAI | Oil Binding Index |
|---------|-----|-------------------|
| CGM 1 | 109 | 1151 |
| CGM2 | 111 | 1300 |
| CPC 1 | 103 | 1335 |
| CPC2 | 103 | 1168 |

**OTHER EMBODIMENTS:**

It is to be understood that while the invention has been described in conjunction with the detailed description thereof, the foregoing description is intended to illustrate and not limit the scope of the invention, which is defined by the scope of the appended claims. Other aspects, advantages, and modifications are within the scope of the following claims.

**FURTHER EMBODIMENTS:**

1. A food product comprising a base food, and a corn protein concentrate incorporated on or in said base food, wherein said corn protein concentrate is prepared by a process comprising:

contacting one or more protein-containing materials with one or more wet-mill streams and one or more carbohydrases to produce at least one protein concentrate and at least one aqueous stream containing water-soluble carbohydrates; and
separating the protein concentrate from the aqueous stream containing water-soluble carbohydrates.

2. The food product of embodiment 1, wherein the base food is pasta.

3. The food product of embodiment 2, wherein the pasta is spaghetti.

4. The food product of embodiment 1, wherein the base food is a baked product.

5. The food product of embodiment 4, wherein the baked food product is bread, cake, cookies, or biscuits.

6. The food product of embodiment 1, wherein the base food is a snack food.

7. The food product of embodiment 6, wherein the snack food is chips, crackers, or trail mix.

8. The food product of embodiment 1, wherein the base food is meat and wherein said corn protein concentrate is incorporated thereon in a batter or breading.

9. The food product of embodiment 8, wherein the meat is chicken, pork, beef, or fish.

10. The food product of embodiment 1, wherein the base food is a fruit or vegetable and wherein said corn protein concentrate is incorporated thereon in a batter or breading.

11. The food product of embodiment 1, wherein the food product provides nutritional benefit.

12. The food product of embodiment 11, wherein the food product is an energy bar or an energy drink.

13. The food product of embodiment 12, wherein the food product further comprises one or more proteins from whey seed or legume seed.

14. The food product of embodiment 1, wherein the base food and/or the food product is extruded.

15. The food product of embodiment 1, wherein the process further comprises defatting the protein-containing materials.

16. The food product of embodiment 1, wherein at least one of the one or more wet-mill streams is selected from the group consisting of steep liquor, light steep water, heavy steep liquor, or mixtures thereof.

17. The food product of embodiment 1, wherein at least one of the one or more protein-containing materials is selected from the group consisting of light gluten fraction, heavy gluten fraction, corn gluten concentrate, corn gluten meal, gluten cake, and mixtures thereof.

18. The food product of embodiment 1, wherein at least one of the one or more carbohydrases is selected from the group consisting of alpha amylase, dextrinase, pullulanase, glucoamylase, hemicellulase, cellulase, and mixtures thereof.

19. The food product of embodiment 1, wherein the process further comprises contacting the one or more protein-containing materials with one or more phytases.

20. The food product of embodiment 1, wherein the process further comprises contacting the corn protein concentrate with a deodorizing compound.

21. The food product of embodiment 20, wherein said deodorizing compound is a cyclodextrin.
X. The concentrate of embodiment 1, wherein there is no significant difference in the protein digestibility by an animal between said corn protein concentrate and said corn gluten meal.

22. A corn protein concentrate comprising at least about 80% protein on a dry weight basis, wherein said corn protein concentrate substantially lacks one or more exogenous polypeptides having saccharification enzyme activity.

23. A corn protein concentrate comprising at least about 80% protein on a dry weight basis, less than about 5% of granular starch and about 1% to about 10% liquefied starch carbohydrates and sugars.

24. A corn protein concentrate, wherein, when said corn protein concentrate is compared to corn gluten meal, said corn protein concentrate:

    a) releases less protein into a 0.5 N NaOH solution;
    b) releases less protein into an SDS solution;
    c) has a pH that consistently stays above about 5;
    d) has a lower wet milling-like odor;
    e) has less bacterial counts; and/or;
    f) has lower ash content on a per protein basis.

25. The concentrate of embodiment 24, wherein there is no significant difference in the protein digestibility between said corn protein concentrate and said corn gluten meal.

26. A corn protein concentrate, wherein, when said corn protein concentrate is compared to corn gluten meal following extrusion, said corn protein concentrate:

    a) exhibits more controllable expansion;
    b) exhibits greater expansion;
    c) exhibits more uniform cell structure;
    d) creates a more homogenous product; and/or
    e) produces a pellet with a smoother surface.

27. The concentrate of embodiment 26, wherein the said corn protein concentrate has greater oil binding capacity during extrusion than said corn gluten meal.

28. A food product comprising the extruded corn protein concentrate of embodiment 26, wherein said food product further comprises a minimum of 10% oil and a maximum of 30% oil.

29. The food product of embodiment 28, wherein said oil is a vegetable oil.

30. The food product of embodiment 29, wherein said vegetable oil is selected from the group consisting of corn oil, soybean oil, canola oil, palm oil, rapeseed oil, peanut oil, and sunflower oil.

31. The food product of embodiment 28, wherein said oil is an animal oil.

32. The food product of embodiment 31, wherein said animal oil is selected from the group consisting of chicken fat, tallow, white grease, lard, and fish oil.

**Claims**

1. A corn protein concentrate comprising at least about 80% protein on a dry weight basis, and an amount of ether extractable fat of at least 2.42% on a dry weight basis.

2. The corn protein concentrate of claim 1, wherein the amount of ether extractable fat is at least 2.44% on a dry weight basis.

3. The corn protein concentrate of claim 1, wherein the amount of ether extractable fat is at least 2.56% on a dry weight basis.

4. The corn protein concentrate of claim 1, wherein the corn protein concentrate has a water solubility index (WSI) value of 5 or greater.

5. The corn protein concentrate of claim 1, wherein the corn protein concentrate has a water solubility index (WSI) value of 6 or greater.

6. The corn protein concentrate of claim 1, wherein the corn protein concentrate has a solubility in a solution of 0.5 N sodium hydroxide of 28.8% or less of solubilized protein.

7. The corn protein concentrate of claim 1, wherein the corn protein concentrate has a solubility in a solution of 0.5 N sodium hydroxide of 27.5% or less of solubilized protein.

8. The corn protein concentrate of claim 1, wherein the corn protein concentrate has an ethanol absorption index value of 3.3 or greater.

9. The corn protein concentrate of claim 1, wherein the corn protein concentrate has an ethanol absorption index value of 3.6 or greater.

10. The corn protein concentrate of claim 1, wherein the corn protein concentrate has an oil absorption index (OAI) value of 103 or less.

Europäisches
Patentamt

European
Patent Office

Office européen
des brevets

**EUROPEAN SEARCH REPORT**

Application Number

EP 12 16 6855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 290 749 A (CHRISTIANS NICK E [US] ET AL) 1 March 1994 (1994-03-01)<br>* column 3, lines 31-58; examples 1,8 *<br>----- | 1-10 | INV.<br>A23J1/12<br>A23J1/00 |
| X | US 3 782 964 A (KNIGHT J)<br>1 January 1974 (1974-01-01)<br>* column 1, line 53 - column 2, line 16; example 2 *<br>----- | 1-10 | A23J1/16<br>A23K1/16<br>A23K1/18<br>A21D13/08<br>A23L1/16<br>A23L1/164 |
| X | ANONYMOUS: "Preparation of edible proteins from the by-products of corn wet milling (CPC International)",<br>RESEARCH DISCLOSURE, MASON PUBLICATIONS, HAMPSHIRE, GB,<br>vol. 185, no. 19, September 1979 (1979-09), XP007106760,<br>ISSN: 0374-4353<br>* item 1;<br>page 3, paragraph 4 *<br>----- | 1-10 | A23L1/176<br>A23L1/212<br>A23L1/305<br>A23L1/31<br>A23L1/315<br>A23L1/317<br>A23L1/325<br>A23L2/66<br>A21D13/06 |
| X | US 4 361 651 A (KEIM CARROLL R)<br>30 November 1982 (1982-11-30)<br>* column 6, line 22 - column 8, line 12; claims 1,6 *<br>----- | 1-10 | TECHNICAL FIELDS SEARCHED (IPC)<br>A23J<br>A23K<br>A21D |
| X,P | WO 2005/074704 A1 (CARGILL INC [US]; SLABBEKOORN JOHANNIS [NL]; DE MEESTER JOHAN [BE]; VE)<br>18 August 2005 (2005-08-18)<br>* examples 3,5,11-12; tables 3-2,5-2,12-1 *<br>----- | 1-10 | A23L |

The present search report has been drawn up for all claims

| Place of search | Date of completion of the search | Examiner |
|---|---|---|
| Munich | 18 July 2012 | Muller, Isabelle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 12 16 6855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | A23J3/14 |

TECHNICAL FIELDS
SEARCHED      (IPC)

The present search report has been drawn up for all claims

| Place of search | Date of completion of the search | Examiner |
|---|---|---|
| Munich | 18 July 2012 | Muller, Isabelle |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 12 16 6855

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2012

| Patent document cited in search report | | Publication date | Patent family member(s) | | Publication date |
|---|---|---|---|---|---|
| US 5290749 | A | 01-03-1994 | NONE | | |
| US 3782964 | A | 01-01-1974 | GB | 1244288 A | 25-08-1971 |
| | | | US | 3782964 A | 01-01-1974 |
| US 4361651 | A | 30-11-1982 | NONE | | |
| WO 2005074704 | A1 | 18-08-2005 | AR | 047658 A1 | 01-02-2006 |
| | | | PE | 00332007 A1 | 18-02-2007 |
| | | | US | 2007172914 A1 | 26-07-2007 |
| | | | WO | 2005074704 A1 | 18-08-2005 |

EPO FORM P0459

For more details about this annex : see Official Journal of the European Patent Office, No. 12/82

## REFERENCES CITED IN THE DESCRIPTION

**Patent documents cited in the description**

- US 2005003282 W

**Non-patent literature cited in the description**

- **BRADFORD.** *Anal. Biochem.,* 1975, vol. 7, 248
- Introduction. **POWERS.** Food Flavours. Elseviers Scientific, 1982, 121-168
- **ANDERSON et al.** *Cereal Science Today,* 1969, vol. 14 (1), 4-11